# EUROPEAN PATENT APPLICATION

(11) **EP 3 900 930 A1**
(43) Date of publication of application: **27.10.2021**
(21) Application number: 19898680.4
(22) Date of filing: 19.12.2019
(51) Int. Cl.: B32B 27/00, B32B 27/40, B65D 65/40, C09J 5/04, C09J 175/04, B32B 7/12

(54) **ADHESIVE, LAMINATED FILM, AND METHOD FOR PRODUCING LAMINATED FILM**

(30) Priority: 21.12.2018 JP 2018239597
(71) Applicant: DIC Corporation, Tokyo 174-8520 (JP)
(72) Inventor: TOMITA Daiki, Tokyo 174-8520 (JP); HONMA Takao, Tokyo 174-8520 (JP); TAKAHASHI Shigekazu, Tokyo 174-8520 (JP)
(74) Representative: Gerauer, Marc Philippé
(86) International application number: PCT/JP2019/049801
(87) International publication number: WO 2020/130073

(57) **Abstract**

Provided is a solventless two-component adhesive having excellent processed appearance and processability while exhibiting excellent adhesive strength even with aging at room temperature (around 25°C) and in a short period of 12 hours. Provided are a two-component curable adhesive containing a polyisocyanate composition (X) containing a polyisocyanate (A) and a resin composition (Y) containing a polyol (B) as essential components, the two-component curable adhesive satisfying (1) to (3), as well as a laminated film and a packaging body produced using the two-component curable adhesive:
(1) a tensile shear adhesive strength (N1) when provided between two bases and after a lapse of 30 minutes after pressure bonding is 0.5 N/cm² or more;
(2) the tensile shear adhesive strength (N1) when provided between two bases and after a lapse of 30 minutes after pressure bonding is three times or less a tensile shear adhesive strength (N2) after a lapse of 10 minutes after pressure bonding; and
(3) a tensile shear adhesive strength (N3) when provided between two bases and after a lapse of 5 hours after pressure bonding is 20 N/cm² or more.

## Description

### Technical Field

The present invention relates to a two-component adhesive and a laminated film obtained by laminating various kinds of films on each other using the adhesive. The present invention more specifically relates to an adhesive for lamination that can be used in a solventless manner and is used when a laminated film is produced by laminating various kinds of plastic films, metal deposited films, aluminum foil, and the like on each other to be used for packaging materials mainly for food, pharmaceuticals, detergents, and the like.

### Background Art

Polyurethane resins are widely used as laminate adhesives for soft packaging materials because of their excellent adhesiveness with bases and excellent flexibility. Laminated films bonded with urethane resin adhesives formed by a reaction between a polyisocyanate and a polyol are used as packaging materials for food, pharmaceuticals, detergents, and the like.

As the laminate adhesives for soft packaging materials in general, two-component curable adhesives, in which a polyisocyanate composition and a polyol composition are mixed together to be applied are used. Among them, two-component curable adhesives of a dry laminate system are often used, in which an adhesive dissolved in an organic solvent is applied to a film, the organic solvent is volatilized while being passed through an oven, and another film is bonded thereto. What has been demanded in recent years, however, from the viewpoint of reducing environmental loads and improving work environments is switching to a solventless laminate system, in which an adhesive is reduced in viscosity through heating without using any organic solvent and is applied to a film, and there have been increasing demands for solventless two-component curable adhesives adapted thereto.

The solventless two-component curable adhesive requires an aging process in order to cause a curing reaction between the polyisocyanate composition and the polyol composition to proceed after lamination and to cause films bonded to each other to adhere to each other. The temperature and time of the aging, which depend on the used adhesive, are usually performed at 30 to 50°C for 1 to 5 days. From the viewpoint of reducing environmental loads and reducing energy costs, improvement toward a lower temperature and a shorter time is being demanded for the aging process; a laminate adhesive that can obtain sufficient adhesive strength unproblematic in a bag production process even at room temperature (around 25°C) and with a short aging time (24 hours or less) is being demanded.

The laminate adhesive causes faulty appearance owing to air bubbles left in a coating film of the adhesive after curing, and the solventless laminate system is especially likely to cause this problem. Examples of the cause of occurrence of air bubbles include air bubbles embraced when the adhesive is applied and carbon dioxide gas generated by a reaction between the polyisocyanate composition and water in the air. An adhesive of the solventless laminate system, which are reduced in viscosity by heating immediately after bonding, is required to be designed to have a lower molecular weight than that of an adhesive of a conventional dry laminate system, and thus the cohesive force of an adhesive layer when films are bonded to each other is small, and gas generated during the reaction process easily gathers and grows to easily cause faulty appearance.

The laminated film laminated using the adhesive is wound into a roll over a length of 500 m to 8,000 m, and thus the laminated film on the inside of the roll becomes deformed through pressure received from the outside to cause wrinkle-like processing defects. In the solventless adhesive in particular, the adhesive does not sufficiently cure immediately after lamination until a lapse of 5 to 6 hours and thus has low cohesive force, and pressure is gradually applied, whereby the films shift from each other to markedly cause wrinkles.

That is to say, while the solventless two-component curable adhesive, which is advantageous for a reduction in environmental loads and improvement in work environments, is expected to further reduce environmental loads by short aging at around 25°C, it has inferior processed appearance and processability, thus resulting in a hindrance to its widespread use.

As a method for exhibiting adhesive strength in a short-time aging at around 25°C in the solventless two-component curable adhesive, a two-component separate application type urethane adhesive is known in which a solventless A agent, which is liquid at room temperature with a compound having an isocyanate group at either molecular end as a main component, and a solventless B agent, which is liquid at room temperature with a compound having an amino group at either molecular end as a main component, are combined with each other (refer to PTL 1, for example).

However, in the two-component separate application type urethane adhesive, the isocyanate group and the amino group instantaneously react with each other at room temperature, and thus it cures before the air bubbles mixed in the lamination process described above escape out of the system, thus resulting in a problem in that desired processed appearance is hard to obtain.

Also known are combining a solventless A agent, which is liquid at room temperature with a compound having an isocyanate group at either molecular end as a main component, a compound having an amino group at either molecular end, and a solventless B agent, which is liquid at room temperature containing a compound having a tertiary amine in the molecule and a stickiness imparting resin, with each other (refer to PTL 2, for example) and combining a solventless A agent, which is liquid at room temperature with a compound having an isocyanate group at either molecular end as a main component, and a solventless B agent, which is liquid at room temperature with a compound having a hydroxy group in the molecule as a main component and further containing a tertiary amine compound and/or a reaction catalyst such as an organotin compound, with each other (refer to PTL 3, for example). However, the reaction catalyst also promotes a reaction between the polyisocyanate composition and water and thus excessively generates gas. In addition, immediately after processing, cohesive force large enough to suppress aggregation of air bubbles cannot be obtained, thus resulting in a problem in that desired processed appearance is hard to obtain.

### Citation List

### Patent Literature

PTL 1: Japanese Unexamined Patent Application Publication No. 2003-171642
PTL 2: Japanese Unexamined Patent Application Publication No. 2003-171641
PTL 3: Japanese Unexamined Patent Application Publication No. 2003-171643

### Summary of Invention

### Technical Problem

An object the present invention is to provide a solventless two-component adhesive having excellent processed appearance and processability while exhibiting excellent adhesive strength even with aging at room temperature (around 25°C) and in a short period of 12 hours.

### Solution to Problem

The inventors of the present invention have found out that a two-component curable adhesive satisfying specific conditions exhibits excellent adhesive strength, processed appearance, and processing suitability even with 12-hour aging at around 25°C and thus completed the present invention.

Specifically, the present invention provides a two-component curable adhesive containing a polyisocyanate composition (X) containing a polyisocyanate (A) and a resin composition (Y) containing a polyol (B) as essential components, the two-component curable adhesive satisfying (1) to (3):
(1) a tensile shear adhesive strength (N1) when provided between two bases and after a lapse of 30 minutes after pressure bonding is 0.5 N/cm² or more;
(2) the tensile shear adhesive strength (N1) when provided between two bases and after a lapse of 30 minutes after pressure bonding is three times or less a tensile shear adhesive strength (N2) after a lapse of 10 minutes after pressure bonding; and
(3) a tensile shear adhesive strength (N3) when provided between two bases and after a lapse of 5 hours after pressure bonding is 20 N/cm² or more.

The present invention also provides a two-component curable adhesive containing a polyisocyanate composition (X) containing a polyisocyanate (A) and a resin composition (Y1) containing a polyol (B) and a polyamine (C) as essential components.

The present invention also provides a method for producing a laminated film having a step of two-component separate application in which a polyisocyanate composition (X) containing a polyisocyanate (A) applied to one base and a resin composition (Y1) containing a polyol (B) and a polyamine (C) applied to another base come into contact with each other to be pressure-bonded to each other.

The present invention also provides a laminated film having a cured adhesive between a first base film and a second base film, the adhesive layer being a layer of the reactive adhesive.

The present invention also provides a packaging body made by forming a laminated film having a cured adhesive between a first base film and a second base film into a bag form, the adhesive layer being a layer of the reactive adhesive.

### Advantageous Effects of Invention

The solventless two-component adhesive of the present invention exhibits excellent adhesive strength with 12-hour aging at around 25°C, and thus a laminated film using the adhesive has excellent productivity, has excellent processed appearance and processing suitability, and can thus reduce a defective rate after processing.

### Description of Embodiments

### (Tensile Shear Adhesive Strength)

The following describes tensile shear adhesive strength in the present invention.

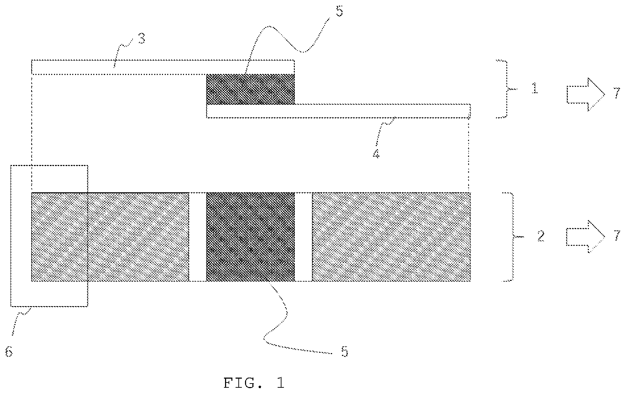

FIG. 1 is a shape of a laminated film as a sample for measurement of the tensile shear adhesive strength. In FIG. 1, 1 is a view of the laminated film from the side, whereas 2 is a view from the top. For two bases 3 and 4, a 50 µm thick corona-treated polyethylene terephthalate (hereinafter, may be referred to as PET) film is used. An adhesion part 5 of a two-component curable adhesive provided between the two bases 3 and 4 is formed to have an area of 10 mm², with an error range of ±0.5 mm² allowed. An application amount of the two-component curable adhesive to the part 5 is 1.0 g/m².

A method for applying the two-component curable adhesive to the adhesion part 5 is performed by any of the following methods.
(Method 1) A polyisocyanate composition (X) containing a polyisocyanate (A) and a resin composition (Y) containing a polyol (B) are mixed together in advance, which are then applied to either one of the bases 3 and 4, and the other base is overlaid on the one base to be pressure-bonded thereto.
(Method 2) The polyisocyanate composition (X) containing the polyisocyanate (A) is applied to either one of the bases 3 and 4, the resin composition (Y) containing the polyol (B) is applied to the other base, and then the two bases are pressure-bonded to each other with an overlaying calender roll, a nip roll, or the like so as to bring the composition (X) and the composition (Y) into contact with each other.

The conditions for pressure bonding may be conditions employed in normal laminating; pressure bonding is generally performed with a pressure of about 3 to 800 kg/cm².

After a lapse of a predetermined time with the pressure bonding and the holding temperature maintained at about 25°C, while one base side 6 (the base 3 in FIG. 1) is held with a clamp, the other base side is pulled in a direction of an arrow 7 at a pulling speed of 5 mm/min to measure the adhesive strength of the adhesion part 5. In the present invention, using the Autograph AGS-F manufactured by Shimadzu Corporation as a tensile testing machine, measurements were conducted immediately after production of the laminated film, after 5 minutes, after 10 minutes, after 20 minutes, after 30 minutes, after 1 hour, after 2 hours, after 3 hours, and after 5 hours.

The tensile shear adhesive strength employed in the present invention can directly measure the cohesive force of the adhesive actually held between two bases. Although an adhesive having isocyanate groups like the two-component curable adhesive of the present invention is easily affected by water in a thin film state in general, the tensile shear adhesive strength in the present invention can accurately measure the behavior of the adhesive with as little influence of water as possible.

For the two-component curable adhesive of the present invention, adhesives can be used without limitation so long as the tensile shear adhesive strength measured by the above method of measurement satisfies (1) to (3) below. Among them, particularly preferred is a two-component curable adhesive in which the resin composition (Y) is a resin composition (Y1) containing the polyol (B) and a polyamine (C) .
(1) a tensile shear adhesive strength (N1) when provided between two bases and after a lapse of 30 minutes after pressure bonding is 0.5 N/cm² or more;
(2) the tensile shear adhesive strength (N1) when provided between two bases and after a lapse of 30 minutes after pressure bonding is three times or less a tensile shear adhesive strength (N2) after a lapse of 10 minutes after pressure bonding; and
(3) a tensile shear adhesive strength (N3) when provided between two bases and after a lapse of 5 hours after pressure bonding is 20 N/cm² or more.

Although the reason why the two-component curable adhesive of the present invention having such tensile shear adhesive strengths has excellent adhesive strength, processed appearance, and processing suitability after 12 hours at room temperature is not certain, it is estimated as follows in the case of the two-component curable adhesive as a combination of the polyisocyanate composition (X) and the resin composition (Y1) containing the polyol (B) and the polyamine (C) in particular.

The polyamine (C), that is, an amine compound has extremely high reactivity with the polyisocyanate (A), that is, an isocyanate compound and thus instantaneously reacts therewith. That is to say, when the polyisocyanate composition (X) containing the polyisocyanate (A) and the resin composition (Y1) containing the polyamine (C) come into contact with each other, the amino group of the polyamine (C) selectively reacts with the isocyanate group of the polyisocyanate (A) to instantaneously increase the cohesive force of the adhesive. This improves the tensile shear adhesive strength of the laminated film, which reaches 0.5 N or more after 30 minutes. Thus, agglomerative growth of minute air bubbles trapped during processing and carbon dioxide gas generated by a reaction with water can be suppressed, and thus the air bubbles can be kept to a minute size.

Next, after all the amino groups have reacted, a reaction between the isocyanate groups and the hydroxy groups of the polyol (B) of the resin composition (Y1) proceeds relatively gently. Thus, a rising rate of the cohesive force is also made gentle, making difference in the tensile shear adhesive strength between after 10 minutes and after 30 minutes three times or less. Consequently, the minute air bubbles trapped during processing escape out of the system, and appropriate cohesive force enabling an adhesive coating film to be leveled to a smooth state can be maintained for a certain time.

If the tensile shear adhesive strength is less than 0.5 N/cm² after 30 minutes, aggregation of the air bubbles cannot be suppressed, and the air bubbles that have grown cause faulty appearance. If the tensile shear adhesive strength after 30 minutes is three times or more that after 10 minutes, the cohesive force is extremely high, making it difficult to perform defoaming and leveling, and thus the air bubbles are left, and faulty appearance is likely to occur. That is to say, appropriate cohesive force that can achieve both suppression of aggregation of the air bubbles and defoaming and leveling is exhibited in an early stage, and the cohesive force is maintained, whereby practical processed appearance can be achieved after aging.

Next, the reaction between the isocyanate groups and the hydroxy groups sufficiently proceeds to further improve the cohesive force of the adhesive. Consequently, the tensile shear adhesive strength after 5 hours reaches 20 N/cm² or more. Thus, even on the inside of the laminated film wound in a roll, the shift between the films caused by external pressure can be prevented, and thus excellent processing suitability with reduced wrinkle-like processing defects is exhibited. If the tensile shear adhesive strength does not reach 20 N/cm² after 5 hours, the shift between the films cannot be prevented, and thus wrinkle-like processing defects markedly occur.

In order for the tensile shear adhesive strength to reach 20 N/cm² after 5 hours, the components of the polyisocyanate composition (X) and the resin composition (Y1) are required to uniformly diffuse in the coating film during curing without aggregating and gelating and to exhibit excellent curability at around room temperature 25°C. Consequently, such an adhesive can exhibit sufficient adhesive strength that can withstand practical use after 12 hours at around room temperature 25°C.

On the other hand, if the tensile shear adhesive strength after 5 hours does not reach 20 N/cm², it is presumed that curability is poor or the reactivity is extremely fast to coagulate the adhesive, whereby sufficient adhesive strength cannot be obtained after 12 hours.

### (Two-component Curable Adhesive)

The following describes a two-component curable adhesive containing the polyisocyanate composition (X) containing the polyisocyanate (A) and the composition (Y1) containing the polyol (B) and the polyamine (C) as essential components as a preferred aspect of the two-component curable adhesive of the present invention.

### (Polyisocyanate (A))

The polyisocyanate (A) used in the present invention is not limited to a particular polyisocyanate, and known ones can be used. Examples thereof include aromatic polyisocyanates such as tolylene diisocyanate, 2,4'-diphenylmethane diisocyanate (hereinafter, "diphenylmethane diisocyanate" may be referred to simply as MDI), 2,2'-MDI, 4,4'-MDI, 1,5-naphthalene diisocyanate, and triphenylmethane triisocyanate and compounds in which part of the isocyanate groups (hereinafter, may be referred to as NCO groups) of these polyisocyanates is modified with carbodiimide; aliphatic polyisocyanates such as xylylene diisocyanate, isophorone diisocyanate, 4,4'-methylenebis(cyclohexyl isocyanate), 1,3-(isocyanatomethyl)cyclohexane, 1,6-hexamethylene diisocyanate, lysine diisocyanate, and trimethylhexamethylene diisocyanate; isocyanurate bodies derived from these polyisocyanates; allophanate bodies derived from these polyisocyanates; biuret bodies derived from these polyisocyanates; trimethylolpropane modified adduct bodies of these polyisocyanates; and polyisocyanates as reaction products of the various kinds of polyisocyanates described above and polyol components.

Specific examples of the polyol components to be reacted with the aromatic polyisocyanates and the aliphatic polyisocyanates described above include chain aliphatic glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, and bishydroxyethoxybenzene;
alicyclic glycols such as 1,4-cyclohexanediol and 1,4-cyclohexanedimethanol; trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
polyether polyols obtained by addition polymerizing alkylene oxides such as ethylene oxide, propylene oxide, butylene oxide, styrene oxide, epichlorohydrin, tetrahydrofuran, and cyclohexylene in the presence of polymerization initiators such as the glycols and the trifunctional or tetrafunctional aliphatic alcohols; a polyester polyol (1) as reaction products of polyesters obtained by a ring-opening polymerization reaction of cyclic ester compounds such as propiolactone, butyrolactone, ε-caprolactone, σ-valerolactone, and β-methyl-σ-valerolactone and the glycols or the trifunctional or tetrafunctional aliphatic alcohols;
a polyester polyol (2) obtained by reacting polyols such as the chain aliphatic glycols, the alicyclic glycols, the dimer diols, the bisphenols, and the polyether polyols with polyvalent carboxylic acids;
a polyester polyol (3) obtained by reacting the trifunctional or tetrafunctional aliphatic alcohols with polyvalent carboxylic acids;
a polyester polyol (4) obtained by reacting polyols such as the chain aliphatic glycols, the alicyclic glycols, the dimer diols, the bisphenols, and the polyether polyols, the trifunctional or tetrafunctional aliphatic alcohols, with polyvalent carboxylic acids;
a polyester polyol (5) as polymers of hydroxy acids such as dimethylolpropionic acid and castor oil fatty acids; and
castor oil, dehydrated castor oil, hardened castor oil as a hydrogenated product of castor oil, castor oil-based polyols such as a 5 to 50 mol alkylene oxide adduct of castor oil, and mixtures thereof.

Examples of the polyvalent carboxylic acids used for production of the polyester polyol (2), (3), or (4) include acyclic aliphatic dicarboxylic acids such as succinic acid, adipic acid, azelaic acid, sebacic acid, dodecanedicarboxylic acid, maleic anhydride, and fumaric acid; alicyclic dicarboxylic acids such as 1,3-cyclopentanedicarboxylic acid and 1,4-cyclohexanedicarboxylic acid; aromatic dicarboxylic acids such as terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or aromatic dicarboxylic acids; p-hydroxybenzoic acid, p-(2-hydroxyethoxy)benzoic acid, and ester-forming derivatives of their dihydroxycarboxylic acids; and polybasic acids such as dimeric acid.

Among these polyol components, in particular, a polyisocyanate with the polyether polyol as an essential component and obtained by reacting it with the polyisocyanate is preferred in view of wettability. Furthermore, a polyol having a polypropylene skeleton is preferred because the polyisocyanate (A) has low viscosity and is easy to handle at low temperatures.

From the viewpoint of the flexibility of the coating film after curing, a polyether polyol having a number average molecular weight (Mn) of 300 to 5,000, more preferably 350 to 3,000 is preferably used. In the invention of the present application, a weight average molecular weight (Mw) and the number average molecular weight (Mn) are values measured by gel permeation chromatography (GPC) under the following conditions.

Measurement apparatus: HLC-8320GPC manufactured by Tosoh Corporation
Column: TSKgel 4000HXL, TSKgel 3000HXL, TSKgel 2000HXL, and TSKgel 1000HXL manufactured by Tosoh Corporation Detector: RI (a differential refractometer)
Date processing: Multi Station GPC-8020 model II manufactured by Tosoh Corporation
Measurement conditions:
   Column temperature: 40°C
   Solvent: tetrahydrofuran
   Flow rate: 0.35 ml/minute
Standard: monodispersed polystyrene
Sample: a 0.2% by mass tetrahydrofuran solution in terms of resin solid content filtered through a microfilter (100 µl)

The ratio of the polyether polyol having a number average molecular weight (Mn) of 300 to 5,000 in the polyol component is preferably 50% by mass or more as an example. The entire amount of the polyol component may be such as polyether polyol.

The polyisocyanate to be reacted with the polyether polyol preferably contains an aromatic polyisocyanate because it has excellent reactivity with the polyamine (C), which will be described below, and it is easy to adjust the tensile shear adhesive strength (N1) after a lapse of 30 minutes after pressure bonding to 0.5 N/cm² or more. The blending amount of the aromatic polyisocyanate may be adjusted as appropriate such that the tensile shear adhesive strengths (N1) to (N3) satisfy (1) to (3) described above; as an example, the ratio of the aromatic polyisocyanate out of 100 parts by mass of the polyisocyanate to be reacted with the polyol component is preferably 40 parts by mass or more and more preferably 50 parts by mass or more. The upper limit is not limited to a particular value; from the viewpoint of storage stability, it is preferably 95 parts by mass or less and more preferably 90 parts by mass or less. From the viewpoint of storage stability, at least one of an aliphatic polyisocyanate and derivatives of the aliphatic polyisocyanate is preferably used in combination with the aromatic polyisocyanate.

The reaction ratio of the polyisocyanate to the polyol component described above is preferably such that the equivalent ratio of the isocyanate group to the hydroxy group in the polyol component [isocyanate group/hydroxy group] is in a range of 1.5 to 5.0 in view of the viscosity of the adhesive being in an appropriate range to give favorable application properties or the cohesive force of the adhesive coating film.

The weight average molecular weight (Mw) of the polyisocyanate (A) described above is preferably in a range of 300 to 10,000 in view of ensuring appropriate inclusion while reducing an aging time and more preferably in a range of 500 to 5,000.

An isocyanate content by titration (using di-n-butylamine) of 5 to 20% by mass is preferred because of appropriate resin viscosity to give excellent application properties.

### (Composition (Y) Containing Polyol (B) and Polyamine (C))

In the present invention, the composition (Y) contains the polyol (B) and the polyamine (C).

### (Polyol (B))

Examples of the polyol (B) used in the present invention include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol;
trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
polyether polyols obtained by addition polymerizing alkylene oxides such as ethylene oxide, propylene oxide, butylene oxide, styrene oxide, epichlorohydrin, tetrahydrofuran, and cyclohexylene in the presence of polymerization initiators such as the glycols and the trifunctional or tetrafunctional aliphatic alcohols; polyether urethane polyols obtained by further increasing the molecular weight of the polyether polyols with the aromatic or aliphatic polyisocyanates;
a polyester polyol (1) as reaction products of polyesters obtained by a ring-opening polymerization reaction of cyclic ester compounds such as propiolactone, butyrolactone, ε-caprolactone, σ-valerolactone, and β-methyl-o-valerolactone and polyhydric alcohols such as the glycols, glycerin, trimethylolpropane, and pentaerythritol;
a polyester polyol (2) obtained by reacting bifunctional polyols such as the glycols, the dimer diols, or the bisphenols with polyvalent carboxylic acids;
a polyester polyol (3) obtained by reacting the trifunctional or tetrafunctional aliphatic alcohols with polyvalent carboxylic acids;
a polyester polyol (4) obtained by reacting bifunctional polyols, the trifunctional or tetrafunctional aliphatic alcohols, and polyvalent carboxylic acids with each other;
a polyester polyol (5) as polymers of hydroxy acids such as dimethylolpropionic acid and castor oil fatty acids;
polyester polyether polyols obtained by reacting the polyester polyols (1) to (5), the polyether polyols, and the aromatic or aliphatic polyisocyanates with each other; polyester polyurethane polyols obtained by increasing the molecular weight of the polyester polyols (1) to (5) with the aromatic or aliphatic polyisocyanates; and
castor oil, dehydrated castor oil, hardened castor oil as a hydrogenated product of castor oil, castor oil-based polyols such as a 5 to 50 mol alkylene oxide adduct of castor oil, and mixtures thereof.

Examples of the polyvalent carboxylic acids include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as terephthalic acid, isophthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or dicarboxylic acids; p-hydroxybenzoic acid, p-(2-hydroxyethoxy)benzoic acid, and ester-forming derivatives of their dihydroxycarboxylic acids; and polybasic acids such as dimeric acid.

A tertiary amine compound having a plurality of hydroxy groups can be used as the polyol (B). The tertiary amine compound having a plurality of hydroxy groups essentially has two or more hydroxy groups and preferably has two to six ones. The tertiary amine compound having a plurality of hydroxy groups may have one or more tertiary amino groups and preferably has one to two ones. Specific examples thereof include polypropylene glycol ethylenediamine ether, tri(1,2-polypropylene glycol)amine, N-ethyl diethanolamine, N-methyl-N-hydroxyethyl-N-hydroxyethoxyethylamine, pentakis(hydroxypropyl)diethylenetriamine, tetrakis(hydroxypropyl)ethylenediamine, N,N,N',N'-tetrakis(2-hydroxypropyl)ethylenediamine, and triethanolamine.

For the tertiary amine compound (A) having a plurality of hydroxy groups, commercially available products may be used. Examples of commercially available products include EDP300 manufactured by Adeka Corporation and ED-500 and TE-360 manufactured by Kukdo Chemical Co., Ltd.

For the polyol (B), these compounds can be used alone or in combination. The polyol (B) preferably contains a polyol having a polyether skeleton, especially a polypropylene skeleton because when it is used as the solventless two-component adhesive, it reduces the viscosity to the extent that it can be applied even at about 40 to 50°C and has excellent adhesive strength between metal oxides such as silica and alumina or metals such as aluminum and a film. From the viewpoint of application suitability, the content of the polyol having a polyether skeleton is preferably 5% by mass or more, more preferably 10% by mass or more, more preferably 15% by mass or more, and more preferably 20% by mass or more with respect to the entire amount of the polyol (B). The upper limit is not limited to a particular value; although the entire amount of the polyol (B) may be a polyether polyol, the upper limit is preferably 95% by mass or less from the viewpoint of initial cohesive force.

The polyol (B) preferably contains at least one selected from the group consisting of castor oil, dehydrated castor oil, hardened castor oil as a hydrogenated product of castor oil, and castor oil-based polyols such as a 5 to 50 mol alkylene oxide adduct of castor oil from the viewpoint of initial cohesive force and application suitability. These compounds are preferably 5% by mass or more, more preferably 10% by mass or more, more preferably 15% by mass or more, and more preferably 20% by mass or more with respect to the entire amount of the polyol (B). The upper limit is not limited to a particular value; although the entire amount of the polyol (B) may be castor oil, the upper limit is preferably 95% by mass or less from the viewpoint of application suitability.

The polyol (B) may contain a highly reactive, low molecular weight polyol (liquid at room temperature with a molecular weight of about 150 or less). Such a low molecular weight polyol quickly reacts with the polyisocyanate (A) and can be one of the means to adjust the tensile shear adhesive strength (N1) after a lapse of 30 minutes after pressure bonding to a desired range. On the other hand, when the low molecular weight polyol is used in a large amount, the reaction with the polyisocyanate (A) may be extremely quick, and thus the amount of the low molecular weight polyol is preferably kept to 5% by mass or less and more preferably 3% by mass or less of the polyol (B).

When the polyol (B) contains the tertiary amine compound having a plurality of hydroxy groups, the blending ratio (mass ratio) of the polyol other than the tertiary amine compound to the tertiary amine compound in the polyol (B) is preferably 100/5 to 100/70 and more preferably 100/10 to 100/70.

The weight average molecular weight (Mw) of the polyol (B) used is preferably 400 to 5,000 in view of the viscosity of the adhesive being in an appropriate range to give favorable application properties or the cohesive force of the adhesive coating film.

The hydroxyl value of the polyol (B) is preferably 50 mgKOH/g or more and 300 mgKOH/g or less and more preferably 100 mgKOH/g or more and 250 mgKOH/g or less. The hydroxyl value of the polyol (B) can be measured by the method of hydroxyl value measurement described in JIS-K0070.

### (Polyamine (C))

The polyamine (C) used in the present invention is not limited to a particular polyamine, and known ones can be used; a compound having two or more amino groups (NH₂ groups or NHR groups) in the molecule in order to maintain the toughness of the coating film is desirable. Examples of such a compound include methylenediamine, ethylenediamine, isophoronediamine, 3,9-dipropanamine-2,4,8,10-tetraoxaspiroundecane, lysine, phenylenediamine, 2,2,4-trimethylhexamethylenediamine, tolylenediamine, hydrazine, piperazine, hexamethylenediamine, propylenediamine, dicyclohexylmethane-4,4-diamine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, poly(propylene glycol)diamine, poly(propylene glycol)triamine, poly(propylene glycol)tetraamine, 1,2-diaminopropane, 1,3-diaminopropane,
1,4-diaminobutane, 1,5-diaminopentane, 1-6-diaminohexane, 1,7-diaminoheptane, 1,8-diaminooctane, 1,9-diaminononane, 1,10-diaminodecane, etc., benzylamine, diethylenetriamine, dipropylenetriamine, triethylenetetramine, tripropylenetetramine, tetraethylene pentamine, tetrapropylene pentamine, pentaethylene hexamine, nonaethylene decamine, trimethylhexamethylenediamine, etc., tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bis(hexamethylene)triamine, etc., 1,4-cyclohexanediamine, 4,4'-methylenebiscyclohexylamine, 4,4'-isopropylidenebiscyclohexylamine, norbornadiamine,
bis(aminomethyl)cyclohexane, diaminodicyclohexylmethane, isophoronediamine, menthenediamine, etc., bis(aminoalkyl)benzene, bis(aminoalkyl)naphthalene, bis(cyanoethyl)diethylenetriamine, ortho-xylylenediamine, meta-xylylenediamine, para-xylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenyl sulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene, etc., N-methylpiperazine, morpholine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and polyurea amines, which are reaction products of the various kinds of polyamines described above and the various kinds of isocyanate components described above.

These compounds having amino groups in the molecule may be used alone, or two or more of them may be used in combination. A polyether amine having a polyether structure in a main chain is preferred in order to maintain the flexibility of the coating film.

For the compound (C), commercially available products may be used. Examples of commercially available products include EC-310 and EC-303 manufactured by BASF.

The molar ratio of the isocyanate group of the polyisocyanate composition (X) to the functional groups of the composition (Y1) [isocyanate group/(hydroxy group + amino group)] is preferably 0.5 to 5.0 and more preferably in a range of 1.0 to 3.0 in view of processibility, processed appearance, and adhesive performance.

In the composition (Y1), as to an appropriate amount of the polyol (B) and the polyamine (C), the molar ratio of the amino group derived from the polyamine (C) to the hydroxy group derived from the polyol (B) [amino group/hydroxy group] is desirably 0.001 to 2.0 and, in view of achieving the practicality of the adhesive strength, the processed appearance, and the processability described above, is more preferably in a range 0.1 to 2.0, and even more desirably in a range of 0.1 to 1.0. When this molar ratio of the functional groups is extremely small, the processability tends to become worse, whereas when it is extremely large, the adhesive strength tends to become worse.

### (Catalyst)

In the present invention, a catalyst is used for the two-component curable adhesive, whereby leaching of harmful low molecular weight chemicals represented by aromatic amines from the laminated film to contents can effectively be inhibited. The catalyst used in the present invention is not limited to a particular catalyst so long as it promotes a urethanization reaction; catalysts such as metal catalysts, organometallic catalysts, amine catalysts, diazabicycloundecene (DBU), aliphatic cyclic amide compounds, and titanium chelate complexes can be used, for example.

Examples of the metal catalysts include metal complex-based ones, inorganic metal-based ones, and organometallic ones; specific examples of the metal complex-based ones include acetylacetonate salts of a metal selected from the group consisting of Fe (iron), Mn (manganese), Cu (copper), Zr (zirconium), Th (thorium), Ti (titanium), Al (aluminum), and Co (cobalt); examples thereof include iron acetylacetonate, manganese acetylacetonate, copper acetylacetonate, and zirconia acetylacetonate; among these, iron acetylacetonate (Fe(acac)₃) or manganese acetylacetonate (Mn(acac)₂) is preferred in view of its toxicity and catalytic activity.

Examples of the organometallic catalysts include stannous diacetate, stannous dioctoate, stannous dioleate, stannous dilaurate, dibutyl tin oxide, dibutyl tin diacetate, dibutyl tin dilaurate, dibutyl tin dichloride, dioctyl tin dilaurate, nickel octylate, nickel naphthenate, cobalt octylate, cobalt naphthenate, bismuth octylate, and bismuth naphthenate. Among these, preferred compounds are organotin catalysts, and even more preferred are stannous dioctoate, dibutyl tin dilaurate, bismuth neodecanoate, zinc neodecanoate, or mixtures of these.

Examples of the amine catalysts include triethylenediamine, 2-methyltriethylenediamine, quinuclidine, and 2-methylquinuclidine. Among these, triethylenediamine and 2-methyltriethylenediamine are preferred because of their excellent catalytic activity and industrial availability.

Examples of other tertiary amine catalysts include N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis (2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undec-7-ene, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, 1-(2-hydroxypropyl)-2-methylimidazole.

Examples of the aliphatic cyclic amide compounds include δ-valerolactam, ε-caprolactam, w-enantholactam, η-capryllactam, and β-propiolactam. Among these, ε-caprolactam is more effective in accelerating curing.

The amount of the catalyst added is not limited to a particular amount and can be a known amount; it is generally 0.001 to 5.0% by mass with respect to the total solid content of the two-component curable adhesive.

### (Solvent)

The two-component curable adhesive of the present invention is an adhesive curing by a chemical reaction of isocyanate groups, amino groups, and hydroxy groups and can be used as a solventless adhesive. The "solvent" of the solventless adhesive referred to in the present invention indicates organic solvents having high solubility capable of dissolving the polyisocyanate composition (X) or the resin composition (Y) or (Y1) used in the present invention, and "solventless" indicates that these organic solvents having high solubility are not contained. Specific examples of the organic solvents having high solubility include toluene, xylene, methylene chloride, tetrahydrofuran, methanol, ethanol, isopropyl alcohol, methyl acetate, ethyl acetate, n-butyl acetate, acetone, methyl ethyl ketone (MEK), cyclohexanone, n-hexane, and cyclohexane. Among them, toluene, xylene, methylene chloride, tetrahydrofuran, methyl acetate, and ethyl acetate are known as organic solvents having especially high solubility.

When there is a demand for low viscosity or the like, the two-component curable adhesive of the present invention may be diluted with the organic solvent having high solubility as appropriate in accordance with desired viscosity to be used as an adhesive for dry laminate. In that case, either the polyisocyanate composition (X) or the resin composition (Y) or (Y1) may be diluted or both may be diluted. Examples of the organic solvent used in such a case include methanol, ethanol, isopropyl alcohol, methyl acetate, ethyl acetate, n-butyl acetate, acetone, methyl ethyl ketone (MEK), cyclohexanone, toluene, xylene, n-hexane, and cyclohexane. Among these, in view of solubility, ethyl acetate and methyl ethyl ketone (MEK) are preferred, and ethyl acetate is particularly preferred. The amount of the organic solvent used, which depends on the required viscosity, is often used in a range of 20 to 50% by mass.

The two-component curable adhesive of the present invention may further contain pigments as needed. The pigments that can be used in this case are not limited to particular pigments; examples thereof include organic pigments and inorganic pigments such as extender pigments, white pigments, black pigments, gray pigments, red pigments, brown pigments, green pigments, blue pigments, metallic powder pigments, luminescent pigments, and pearl pigments and plastic pigments described in the 1970 edition of the Handbook of Raw Materials for Coatings (edited by Japan Paint Manufacturers Association).

There are various specific examples of these pigments; examples of the organic pigments include various kinds of insoluble azo pigments such as Benzidine Yellow, Hansa Yellow, and Lake Red 4R; soluble azo pigments such as Lake Red C, Carmine 6B, and Bordeaux 10; various kinds of (copper) phthalocyanine pigments such as phthalocyanine blue and phthalocyanine green; various kinds of basic dyeing lakes such as rhodamine lake and methyl violet lake; various kinds of mordant dye pigments such as quinoline lake and fast sky blue; various kinds of vat dyeing pigments such as anthraquinone pigments, thioindigo pigments, and perinone pigments; various kinds of quinacridone pigments such as Cinquasia Red B; various kinds of dioxazine pigments such as dioxazine violet; various kinds of condensed azo pigments such as Cromophtal; and aniline black.

Examples of the inorganic pigments include various kinds of chromates such as chrome yellow, zinc chromate, and molybdate orange; various kinds of ferrocyanides such as dark blue; various kinds of metal oxides such as titanium oxide, zinc white, Mapico Yellow, iron oxide, red iron oxide, chrome oxide green, and zirconium oxide; various kinds of sulfides and selenides such as cadmium yellow, cadmium red, and mercury sulfide; various kinds of sulfates such as barium sulfate and lead sulfate; various kinds of silicates such as calcium silicate and ultramarine blue; various kinds of carbonates such as calcium carbonate and magnesium carbonate; various kinds of phosphates such as cobalt violet and manganese violet; various kinds of metallic power pigments such as aluminum powder, gold powder, silver powder, copper powder, bronze powder, and brass powder; flake pigments of these metals and mica flake pigments; metallic pigments and pearl pigments such as mica flake pigments in the form of being covered with metal oxides and mica-like iron oxide pigments; and graphite and carbon black.

Examples of the extender pigments include sedimented barium sulfate, powdered calcium carbonate, sedimented calcium carbonate, calcium bicarbonate, white limestone, alumina white, silica, hydrous fine silica (white carbon), ultrafine anhydrous silica (Aerosil), silica sand, talc, sedimented magnesium carbonate, bentonite, clay, kaolin, and ocher.

Furthermore, examples of the plastic pigments include "Grandol PP-1000" and "PP-2000S" manufactured by DIC Corporation.

As the pigment used in the present invention, more preferred are titanium oxide as a white pigment, inorganic oxides such as zinc white, and carbon black as a black pigment because of excellence in durability, weatherability, and visual quality.

The mass ratio of the pigment used in the present invention is more preferably 1 to 400 parts by mass and in particular 10 to 300 parts by mass with respect to a total of 100 parts by mass of the polyisocyanate composition (X) and the resin composition (Y) or (Y1) because of excellence in adhesiveness and blocking resistance.

The two-component curable adhesive of the present invention can contain adhesion promoters. Examples of the adhesion promoters include coupling agents such as silane coupling agents, titanate coupling agents, and aluminum coupling agents and epoxy resins.

Examples of the silane coupling agents include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate coupling agents include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxy titanium.

Examples of the aluminum coupling agents include acetoalkoxyaluminum diisopropylate.

Examples of the epoxy resins include various kinds of epoxy resins such as epi-bis, novolac, β-methyl epichloro, cyclic oxirane, glycidyl ether, glycidyl ester, polyglycol ether, glycol ether, epoxidized fatty acid ester, polyvalent carboxylic acid ester, aminoglycidyl, and resorcinol types ones, which are generally commercially available.

The two-component curable adhesive of the present invention may contain other additives other than the above, if necessary. Examples of the additives include leveling agents; inorganic fine particles such as colloidal silica and alumina sol; polymethylmethacrylate-based organic fine particles; defoamers; anti-sagging agents, wetting and dispersing agents; viscosity modifiers; UV absorbers; metal deactivators, peroxide decomposers; flame retardants; reinforcing agents; plasticizers; lubricants; rust inhibitors; fluorescent whitening agents; inorganic heat absorbers; fire retardants; antistatic agents; and dehydrating agents.

These pigments, catalysts, and additives can be mixed into either the polyisocyanate composition (X) or the resin composition (Y) or (Y1) or be blended as a third component during application.

### (Method for Producing Laminated film)

The laminated film of the present invention can be obtained by known methods. It is obtained by a method having a two-component mixing process in which the polyisocyanate composition (X) and the composition (Y) or (Y1) are mixed together in advance and are then applied to the first base film, then the second base film is laminated to the applied face, and the adhesive layer is cured to be obtained or a method having a two-component separate application process in which the polyisocyanate composition (X) and the composition (Y) or (Y1) are separately applied to the first base film and the second base film, respectively, then the applied faces are brought into contact with each other to be pressure-bonded to each other to laminate the first base film and the second base film on each another, and the adhesive layer is cured to be obtained, for example.

In particular, in the separate application process, the polyisocyanate composition (X) and the composition (Y) or (Y1) come into contact with each other to be pressure-bonded to each other and start to react with each other when the two bases are bonded to each other, whereby curing rapidly proceeds, there is no need to mix the two liquids as in the normal two-component mixing process, thus there is no need to worry about a usable time (pot life) after mixing the two liquids, and workability is excellent. When the separate application process is performed, the polyisocyanate composition (X) may contain the polyol (B), which is preferred. When the composition (Y) is the resin composition (Y1) containing the polyol (B) and the polyamine (C), after contact between the isocyanate group and the amino group or the hydroxy group when the two bases are bonded to each other, the reaction (curing) proceeds more rapidly, which is more preferred. In the method having the separate application process, the catalyst is preferably added to the resin composition (Y) or (Y1).

That is to say, in the present invention, when the method having the two-component separate application process in which the polyisocyanate composition (X) applied to one base film and the composition (Y) applied to the other base film come into contact with each other to be bonded to each other is performed, excellent curability, which is the effect of the two-component curable adhesive of the present invention, can be maximized, which is preferred. In particular, the method is preferably a method for producing a laminated film having the two-component separation application process in which the polyisocyanate composition (X) containing the polyisocyanate (A) and in addition the polyol (B) applied to one base and the resin composition (Y1) containing the polyol (B) and the polyamine (C) applied to the other base come into contact with each other to be pressure-bonded to each other or a method for producing a laminated film having the two-component separate application process in which the polyisocyanate composition (X) containing the polyisocyanate (A) and in addition the polyol (B) applied to one base and the resin composition (Y1) containing the polyol (B), the polyamine (C), and the catalyst applied to the other base come into contact with each other to be pressure-bonded to each other.

The method of pressure bonding is preferably a method bonding the two bases to each other while causing them to pass through between two rolls (laminate rolls) through pressure between the rolls; the temperature of the laminate rolls is preferably about room temperature to 120°C, whereas the pressure is preferably about 3 to 300 kg/cm². A laminated film can thus be obtained.

Whichever method is used, when the two-component curable adhesive of the present invention is used, the adhesive cures to exhibit practical physical properties in 12 to 72 hours at room temperature or under heating after lamination.

In the case of the separate application, to perform mixing of the polyisocyanate composition (X) and the composition (Y) or (Y1) after bonding more efficiently, application with lower viscosity is desirable. Specifically, application with a viscosity of 1,000 mPa·s or less is preferred. The application amounts of the polyisocyanate composition (X) and the composition (Y) or (Y1) are each preferably 0.5 to 3.0 g/m² and more preferably about 0.5 to 2.0 g/m².

### (Film)

As the base film for use in laminates and packaging bodies produced using the two-component curable adhesive of the present invention, plastic films normally used for laminated films are preferred. Examples of the first base film include polyethylene terephthalate (hereinafter, abbreviated as PET) films, nylon (hereinafter, abbreviated as OPA) films, biaxially oriented polypropylene (hereinafter, abbreviated as OPP) films, base films such as various kinds of vapor-deposited films, and aluminum foil. Examples of the second base film include sealant films such as cast polypropylene (hereinafter, abbreviated as CPP) films and linear low-density polyethylene (hereinafter, abbreviated as LLDPE) films.

Paper can be used as the base. Examples of the paper include natural paper and synthetic paper. A printed layer may be provided on an outer or inner surface of a base layer and a paper layer as needed.

The thus obtained laminated film can industrially be used as packaging materials filled with detergents and drugs such as soft packaging films and soft packaging materials (packaging with its shape formed by inserting contents thereinto). Examples of specific uses as detergents and drugs include liquid detergents for laundry, liquid detergents for kitchens, liquid detergents for baths, liquid soaps for baths, liquid shampoos, and liquid conditioners.

Packaging materials produced using the two-component curable adhesive of the present invention do not cause separation of the laminate components such as delamination not only when filled with contents such as detergents or drugs but also after a lapse of time after filling and thus have excellent adhesiveness and contents resistance.

In addition, printing inks may be gravure printed or flexographic printed on the first plastic film, and even in this case, a favorable lamination appearance can be achieved. The printing inks can be solvent-based, water-based, or active energy ray-curable inks.

When the two-component adhesive used in the present invention is used, the adhesive cures to exhibit practical physical properties in 12 to 72 hours at room temperature or under heating after lamination.

### (Packaging Body)

The packaging body of the present invention is made by forming the laminated film into a bag form, and specifically, the laminated film is heat sealed to form the packaging body. When considering uses as a packaging body, necessary performance (easy tearability and hand cuttability), rigidity and durability (impact resistance and pinhole resistance, for example) required as a packaging body, and the like, other layers can be laminated as needed. The packaging body is usually used accompanied by a base layer, a paper layer, a second sealant layer, a nonwoven fabric layer, or the like. As to the method for laminating other layer, known methods can be used. They can be laminated by dry lamination, thermal lamination, heat sealing, extrusion lamination, or the like with an adhesive layer provided between the laminated film and other layers, for example.

Specific examples of laminate configurations include first plastic film layer/adhesive layer/second plastic layer, which can suitably be used for general packaging bodies, lids, refill containers, and the like, base layer/adhesive layer/first plastic film layer/adhesive layer/second plastic layer, which uses the first plastic layer as a barrier layer, second plastic layer/paper layer/adhesive layer/first plastic film layer/adhesive layer/second plastic layer, second plastic layer/paper layer/polyolefin resin layer/base layer/first plastic layer/adhesive layer/second plastic layer, and paper layer/first plastic film layer/adhesive layer/sealant layer, which can suitably be used for paper containers, paper cups, and the like, and second plastic layer/adhesive layer/first plastic layer/adhesive layer/second plastic layer, which can suitably be used for tube containers and the like. These laminates may have a printed layer, a top coat layer, or the like as needed.

Examples of the first plastic film layer include polyester resin films such as polyethylene terephthalate (PET), polyethylene naphthalate (PEN), and polylactic acid (PLA); polyolefin resin films such as polypropylene; polystyrene resin films; polyamide resin films such as nylon 6 and poly-p-xylylene adipamide (MXD6 nylon); polycarbonate resin films; polyacrylonitrile resin films; polyimide resin films; and multilayered bodies of these (nylon 6/MXD6/nylon 6 and nylon 6/ethylene-vinyl alcohol copolymer/nylon 6, for example) and mixed bodies thereof. Among them, ones having mechanical strength and dimensional stability are preferred. In particular, films freely stretched in biaxial directions among these are preferably used.

To impart barrier functions, the first plastic film layer can be a vapor-deposited layer such as aluminum vapor-deposited, silica vapor-deposited, alumina vapor-deposited, or silica-alumina binary-deposited one; and an organic barrier layer formed of vinylidene chloride resin, modified polyvinyl alcohol, ethylene-vinyl alcohol copolymer, MXD nylon, or the like apart from soft metal foil such as aluminum foil.

For the second plastic film layer, conventionally known sealant resins can be used. Examples thereof include polyolefin resins such as polyethylene such as low-density polyethylene (LDPE), linear low-density polyethylene (LLDPE), and high-density polyethylene (HDPE), acid-modified polyethylene, polypropylene (PP), acid-modified polypropylene, copolymerized polypropylene, ethylene-vinyl acetate copolymer, ethylene-(meth)acrylic ester copolymer, ethylene-(meth)acrylic acid copolymer, and ionomers. Among them, polyethylene resins are preferred from the viewpoint of low-temperature sealing properties, and polyethylene is particularly preferred because of its low cost. The thickness of the sealant layer, which is not limited to a particular thickness, is preferably in a range of 10 to 60 µm and more preferably in a range of 15 to 40 µm in consideration of processability into packaging materials and heat sealability. In addition, by providing irregularities with a height difference of 5 to 20 µm on the sealant layer, it is possible to impart slipperiness to the sealant layer and tearability to packaging materials.

Examples of the paper layer include natural paper and synthetic paper. The first and second sealant layers can be formed of the same material as that of the sealant layer described above. A printed layer may be provided on the outer or inner surface of the base layer and the paper layer as needed.

The "other layers" may contain known additives and stabilizers such as antistatic agents, easy-adhesion coating agents, plasticizers, lubricants, and antioxidants. The "other layers" may be a film the surface of which has been subjected to corona treatment, plasma treatment, ozone treatment, chemical treatment, solvent treatment, or the like as pre-treatment in order to improve adhesion when laminated with other materials.

The packaging body of the present invention has various aspects such as three-side-seal bags, four-side-seal bags, gusset bags, pillow bags, Goebel-top type bottomed containers, tetraclassic, Bruck type, tube containers, paper cups, and lidding materials. The packaging body of the present invention may be provided with easy-open treatment or resealable means as appropriate.

The packaging body of the present invention can industrially be used as packaging bodies mainly filled with food, detergents, and drugs. Examples of specific uses as detergents and drugs include liquid detergents for laundry, liquid detergents for kitchens, liquid detergents for baths, liquid soaps for baths, liquid shampoos, liquid conditioners, pharmaceutical tablets. The packaging body of the present invention can be used as secondary packaging bodies packaging the containers. The two-component adhesive is used in particular, and thus the packaging body of the present invention can suitably be used as packaging bodies for food and pharmaceutical uses, in which leaching becomes a problem.

### Examples

The following describes the present invention more specifically with reference to examples and comparative examples. "Parts" and "%" in the examples are mass-based unless otherwise noted.

### (Production Example 1 [Synthesis of Polyisocyanate (A-1)])

Into a flask (a reaction vessel) equipped with a stirrer, a thermometer, and a nitrogen gas introduction tube, 41.9 parts of 4,4-diphenylmethane diisocyanate (hereinafter, "diphenylmethane diisocyanate" is abbreviated as "MDI"), 13.0 parts of 2,4'-MDI, and 0.1 part of xylylene diisocyanate (hereinafter, abbreviated as "XDI") were charged, and the mixture was stirred under nitrogen gas and was heated up to 60°C. To the mixture, 20.0 parts of a bifunctional polypropylene glycol (hereinafter, abbreviated as "PPG") with a number average molecular weight of 400 and 25.0 parts of a bifunctional PPG with a number average molecular weight of 2,000 were added dropwise in a few separate batches, and the mixture was raised in temperature up to 80°C and was stirred for 5 to 6 hours to end a urethanization reaction. The obtained polyisocyanate had an NCO group content of 14% and a melt viscosity at 40°C of 1,500 mPa·s. Hereinafter, this polyisocyanate will be abbreviated as A-1.

### (Production Example 2 [Synthesis of Polyisocyanate (A-2)])

Into a flask (a reaction vessel) equipped with a stirrer, a thermometer, and a nitrogen gas introduction tube, 50.0 parts of MDI and 10.0 parts of a biuret body of HDI were charged, and the mixture was stirred under nitrogen gas and was heated up to 60°C. To the mixture, 5.0 parts of a bifunctional PPG with a number average molecular weight of 400 and 35.0 parts of a bifunctional PPG with a number average molecular weight of 1,000 were added dropwise in a few separate batches, and the mixture was raised in temperature up to 80°C and was stirred for 5 to 6 hours to end a urethanization reaction. The obtained polyisocyanate had an NCO group content of 14.0% and a melt viscosity at 40°C of 1,400 mPa·s. Hereinafter, this polyisocyanate will be abbreviated as A-2.

### (Production Example 3 [Synthesis of Polyisocyanate (A-3)])

Into a flask (a reaction vessel) equipped with a stirrer, a thermometer, and a nitrogen gas introduction tube, 60.0 parts of MDI was charged, which was stirred under nitrogen gas and was heated up to 60°C. To MDI, 5.0 parts of a bifunctional PPG with a number average molecular weight of 400 and 35.0 parts of a bifunctional PPG with a number average molecular weight of 1,000 were added dropwise in a few separate batches, and the mixture was raised in temperature up to 80°C and was stirred for 5 to 6 hours to end a urethanization reaction. The obtained polyisocyanate had an NCO group content of 14.0% and a melt viscosity at 40°C of 1,500 mPa·s. Hereinafter, this polyisocyanate will be abbreviated as A-3.

### (Examples 1 to 13 and Comparative Examples 1 to 7)

A-1, A-2, and A-3 were used as the polyisocyanate composition (X). For the composition (Y), B-1 to B-18 prepared in accordance with the formulations in Tables 1 to 3 were used.

**[Table 1]**

| | | B-1 | B-2 | B-3 | B-4 | B-5 | B-6 |
|---|---|---|---|---|---|---|---|
| Polyol (B) | Castor oil | 70.00 | 70.00 | 70.00 | 70.00 | 70.00 | 70.00 |
| | D-1000 | 15.80 | 16.30 | 16.30 | 16.75 | 15.50 | 15.20 |
| | T-403 | 6.60 | | | 6.60 | 7.50 | 7.20 |
| | EDP-300 | | 6.60 | | | | |
| | TE(OH)A | | | 6.60 | | | |
| Polyamine (C) | EC310 | 6.60 | 6.60 | 6.60 | 6.60 | 6.80 | |
| | EC303 | | | | | | |
| | DETA | | | | | | 6.60 |
| Additives | CPL | 1.00 | 0.50 | 0.50 | | | 1.00 |
| | DBTDL | | | | 0.05 | | |
| | Bi-Zn | | | | | 0.20 | |
| Total | | 100.00 | 100.00 | 100.00 | 100.00 | 100.00 | 100.00 |

**[Table 2]**

| | | B-7 | B-8 | B-9 | B-10 | B-11 |
|---|---|---|---|---|---|---|
| Polyol (B) | Castor oil | 70.00 | 70.00 | 70.00 | 70.00 | 43.80 |
| | D-1000 | 15.20 | 15.20 | 12.40 | 9.00 | 15.20 |
| | T-403 | 13.50 | 12.80 | 6.60 | | |
| | EDP-300 | | | | | |
| | TE(OH)A | | | | | |
| Polyamine (C) | EC310 | 0.30 | 1.00 | 10.00 | 20.00 | 40.00 |
| | EC303 | | | | | |
| | DETA | | | | | |
| Additives | CPL | 1.00 | 1.00 | 1.00 | 1.00 | 1.00 |
| | DBTDL | | | | | |
| | Bi-Zn | | | | | |
| Total | | 100.00 | 100.00 | 100.00 | 100.00 | 100.00 |

**[Table 3]**

| | | B-12 | B-13 | B-14 | B-15 | B-16 | B-17 | B-18 |
|---|---|---|---|---|---|---|---|---|
| Polyol (B) | Castor oil | 75.10 | 74.60 | 74.10 | 75.05 | 74.10 | | |
| | D-1000 | 18.30 | 18.30 | 18.30 | 18.30 | 18.30 | | |
| | T-403 | 6.60 | 6.60 | 6.60 | 6.60 | 6.60 | | |
| | EDP-300 | | | | | | | |
| | TE(OH)A | | | | | | | |
| Polyamine (C) | EC310 | | | | | | 100.00 | |
| | EC303 | | | | | | | 100.00 |
| | DETA | | | | | | | |
| Additives | CPL | | 0.50 | 1.00 | | | | |
| | DBTDL | | | | 0.05 | 1.00 | | |
| | Bi-Zn | | | | | | | |
| Total | | 100.00 | 100.00 | 100.00 | 100.00 | 100.00 | 100.00 | 100.00 |

The abbreviations in Tables 1, 2, and 3 are as follows.
Castor oil: Refined castor oil (manufactured by Itoh Oil Chemicals Co., Ltd., hydroxyl value: 160.5 mgKOH/g, melt viscosity at 40°C: 250 mPa·s)
D-1000: Polypropylene glycol (manufactured by Mitsui Chemicals Polyurethane Co., Ltd., number average molecular weight: about 1,000, hydroxyl value: 112 mgKOH/g, melt viscosity at 40°C: 150 mPa·s)Actcol D-1000
T-403: Polyether polyol (manufactured by AGC Inc., functional group: 3, number average molecular weight: about 430, hydroxyl value: 400 mgKOH/g, melt viscosity at 25°C: 350 mPa·s)Excenol 430
EDP-300: N,N,N',N'-Tetrakis(2-hydroxypropyl)ethylenediamine (Adeka Corporation)
TE(OH)A: Triethanolamine (manufactured by Showa Chemical Co., Ltd.)
EC310: Polyoxypropylenepolyamine (manufactured by BASF) Baxxodur EC310, amine value: 350 mgKOH/g
EC303: Polypropylenediamine (manufactured by BASF) Baxxodur EC303, amine value: 56 mgKOH/g
DETA: Diethylenetriamine (manufactured by Mitsui Fine Chemicals, Inc.)
CPL: 2-Oxohexamethyleneimine (manufactured by Kanto Chemical Co., Inc.) ε-caprolactam
DBTDL: Dibutyl tin dilaurate (manufactured by Nitto Kasei Co., Ltd.) Neostann U-100
Bi-Zn: Mixed catalyst of bismuth neodecanoate and zinc (manufactured by The Shepherd Chemical Company) Bicat 8108/Bicat Z mixture

### (Method for Producing Laminated Film for Evaluation)

In accordance with the details listed in Tables 4, 5, and 6, the polyisocyanate composition (X) and the resin composition (Y) were applied to the first base film and the second base film, respectively, and then the applied faces of the first base film and the second base film were pressure-bonded to each other with a nip roll (temperature: 50°C) to produce a laminated film.

The respective application amounts of the polyisocyanate composition (X) and the composition (Y) are as listed in Tables 4, 5, and 6. That is to say, in accordance with the polyisocyanate composition (X) and the polyol composition (Y) with an application amount 1 and an application amount 2, the following was set:
Application amount 1: 1.0 g/m² in total
Application amount 2: 2.0 g/m² in total

### (Tensile Shear Adhesive Strength)

In accordance with the method for producing a laminated film for evaluation, a laminated film with the shape in FIG. 1 was made. For the first base film (the base 3 in FIG. 1) and the second base film (the base 4 in FIG. 1), a corona-treated PET film with a thickness of 50 µm was used. The adhesion part 5 of the two-component curable adhesive provided between the two bases 3 and 4 was formed to have an area of 10 mm², and the application amount was the application amount 1 (1.0 g/m²) .

After a lapse of a predetermined time with the pressure bonding and the holding temperature maintained at about 25 °C, while one base side (the base 3 in FIG. 1) of the laminated film for evaluation was held with a clamp, the other base side was pulled in the direction of the arrow 7 at a pulling speed of 5 mm/min to measure the adhesive strength of the adhesion part 5. In the present invention, using the Autograph AGS-J manufactured by Shimadzu Corporation as a tensile testing machine, measurements were conducted at 25 °C immediately after production of the laminated film, after 5 minutes, after 10 minutes, after 20 minutes, after 30 minutes, after 1 hour, after 2 hours, after 3 hours, and after 5 hours.

### (Adhesive Strength)

Using a corona-treated biaxially oriented nylon (OPA) film (15 µm thick) as the first base film and a corona-treated LLDPE film (60 µm thick) as the second base film, with the application amount 2, a laminated film for heat seal strength measurement was produced. After aging the produced laminated film at 25°C for 12 hours, two laminated films were pressed from the OPA film side with the respective LLDPE faces of the laminated films facing each other using a 1 cm wide heat seal bar to melt bond the laminated films to each other. The heat sealing conditions were 180°C, 0.1 bar, and 1 second. The heat seal part was cut into 15-mm wide pieces, and the heat seal strength was measured at a speed of 300 mm/min. The unit of the heat seal strength is N/15 mm.

The evaluation was performed as follows in five grades. Grade 3 or more is determined to be passed.
Grade 5: 50 or more
Grade 4: 40 to 49
Grade 3: 30 to 39
Grade 2: 20 to 29
Grade 1: 0 to 19

### (Processed Appearance)

Using a corona-treated PET film (12 µm thick) as the first base film and an aluminum vapor-deposited polypropylene (VMCPP) film (25 µm thick) as the second base film, with the application amount 2, a laminated film for appearance evaluation was produced. The laminated film was produced at a processing speed of 100, 150, 200, and 250 m/min. After aging the laminated film after lamination for 24 hours, air bubbles left in the laminated film were checked, and a processing speed range with no bubbles left was evaluated. The evaluation was performed as follows in five grades. Grade 3 or more is determined to be passed.
Grade 5: Absence of residual air bubbles at 100 to 250 m/min
Grade 4: Absence of residual air bubbles at 100 to 200 m/min
Grade 3: Absence of residual air bubbles at 100 to 150 m/min
Grade 2: Absence of residual air bubbles at 100 m/min
Grade 1: Presence of residual air bubbles at 100 m/min

### (Processability (Wrinkles))

Using a corona-treated OPA film (15 µm thick) as the first base film and a corona-treated LLDPE film (60 µm thick) as the second base film, with the application amount 2, 4,000 m of a laminated film for processability (wrinkles) measurement was produced and was wound in a roll form. After aging the laminated film after lamination at 25°C for 48 hours, the state of wrinkles on the inside of the roll was checked, and the length of the laminated film from the inside to a place with no occurrence of wrinkles was evaluated. The evaluation was performed as follows in five grades. Grade 3 or more is determined to be passed.
Grade 5: Presence of wrinkles from roll inside up to 10 m
Grade 4: Presence of wrinkles from roll inside up to 50 m
Grade 3: Presence of wrinkles from roll inside up to 100 m
Grade 2: Presence of wrinkles from roll inside up to 200 m
Grade 1: Presence of wrinkles from roll inside up to 300 m

Tables 4, 5, and 6 list results.

**[Table 4]**

| | Example 1 | Example 2 | Example 3 | Example 4 | Example 5 | Example 6 | Example 7 |
|---|---|---|---|---|---|---|---|
| Application amount 1 | | | | | | | |
| Component of (X) | A-1 | A-1 | A-1 | A-1 | A-1 | A-1 | A-1 |
| Application amount of (X) (g/m²) | 0.55 | 0.59 | 0.55 | 0.55 | 0.56 | 0.57 | 0.55 |
| Component of (Y) | B-1 | B-2 | B-3 | B-4 | B-5 | B-6 | B-7 |
| Application amount of (Y) (g/m²) | 0.45 | 0.42 | 0.45 | 0.45 | 0.44 | 0.43 | 0.45 |
| Total application amount (g/m²) | 1.00 | 1.01 | 1.00 | 1.00 | 1.00 | 1.00 | 1.00 |

| Application amount 2 | | | | | | | |
|---|---|---|---|---|---|---|---|
| Component of (X) | A-1 | A-1 | A-1 | A-1 | A-1 | A-1 | A-1 |
| Application amount of (X) (g/m²) | 1.10 | 1.18 | 1.11 | 1.10 | 1.11 | 1.14 | 1.11 |
| Component of (Y) | B-1 | B-2 | B-3 | B-4 | B-5 | B-6 | B-7 |
| Application amount of (Y) (g/m²) | 0.90 | 0.83 | 0.89 | 0.90 | 0.89 | 0.86 | 0.89 |
| Total application amount (g/m²) | 2.00 | 2.01 | 2.00 | 2.00 | 2.00 | 2.00 | 2.00 |

| Application amount 1 Tensile shear adhesive strength (N/cm²) | | | | | | | |
|---|---|---|---|---|---|---|---|
| After 0 minute | 1.3 | 1.1 | 0.3 | 1.1 | 0.2 | 0.3 | 0.2 |
| After 5 minutes | 1.5 | 0.6 | | 1.0 | 0.3 | 0.7 | 0.5 |
| After 10 minutes | 1.8 | 0.7 | 0.6 | 1.2 | 0.5 | 1.0 | 0.3 |
| After 20 minutes | 1.8 | 1.9 | 0.5 | 1.3 | 0.6 | 1.0 | 0.2 |
| After 30 minutes | 1.8 | 1.6 | 0.7 | 1.7 | 0.6 | 1.2 | 0.5 |
| After 1 hour | 2.2 | 3.0 | 2.3 | 2.3 | 0.9 | 1.6 | 1.2 |
| After 2 hours | 8.0 | 19.7 | 12.5 | 3.8 | 2.3 | 8.8 | 2.9 |
| After 3 hours | 17.8 | 47.8 | 30.2 | 7.5 | 7.6 | 24.3 | 8.4 |
| After 5 hours | 38.2 | 54.5 | 49.4 | 21.3 | 26.7 | 32.8 | 27.1 |
| After 30 minutes/after 10 minutes | 1.0 | 2.2 | 1.3 | 1.4 | 1.3 | 1.2 | 1.9 |

| Application amount 2 Evaluation results | | | | | | | |
|---|---|---|---|---|---|---|---|
| Adhesive strength | 4 | 5 | 5 | 4 | 4 | 4 | 4 |
| Processed appearance | 4 | 5 | 5 | 4 | 5 | 3 | 3 |
| Processing suitability | 5 | 5 | 5 | 5 | 5 | 5 | 3 |

**[Table 5]**

| | Example 8 | Example 9 | Example 10 | Example 11 | Example 12 | Example 13 |
|---|---|---|---|---|---|---|
| Application amount 1 | | | | | | |
| Component of (X) | A-1 | A-1 | A-1 | A-1 | A-2 | A-3 |
| Application amount of (X) (g/m²) | 0.55 | 0.56 | 0.57 | 0.62 | 0.56 | 0.56 |
| Component of (Y) | B-8 | B-9 | B-10 | B-11 | B-9 | B-9 |
| Application amount of (Y) (g/m²) | 0.45 | 0.44 | 0.43 | 0.39 | 0.44 | 0.44 |
| Total application amount (g/m²) | 1.00 | 1.00 | 1.00 | 1.01 | 1.00 | 1.00 |

| Application amount 2 | | | | | | |
|---|---|---|---|---|---|---|
| Component of (X) | A-1 | A-1 | A-1 | A-1 | A-2 | A-3 |
| Application amount of (X) (g/m²) | 1.11 | 1.12 | 1.15 | 1.24 | 1.12 | 1.12 |
| Component of (Y) | B-8 | B-9 | B-10 | B-11 | B-9 | B-9 |
| Application amount of (Y) (g/m²) | 0.89 | 0.88 | 0.85 | 0.77 | 0.88 | 0.88 |
| Total application amount (g/m²) | 2.00 | 2.00 | 2.00 | 2.01 | 2.00 | 2.00 |

| Application amount 1 Tensile shear adhesive strength (N/cm²) | | | | | | |
|---|---|---|---|---|---|---|
| After 0 minute | 0.1 | 0.6 | 3.5 | 5.4 | 0.6 | 2.5 |
| After 5 minutes | 0.1 | 5.7 | 4.2 | 4.5 | 5.8 | 2.7 |
| After 10 minutes | 0.3 | 5.1 | 3.4 | 4.8 | 5.1 | 2.9 |
| After 20 minutes | 0.4 | 7.9 | 2.4 | 9.0 | 7.2 | 5.0 |
| After 30 minutes | 0.5 | 6.2 | 3.3 | 9.6 | 7.3 | 7.5 |
| After 1 hour | 1.0 | 7.0 | 4.2 | 11.0 | 7.8 | 11.0 |
| After 2 hours | 2.2 | 9.3 | 6.5 | 16.6 | 10.0 | 16.6 |
| After 3 hours | 7.6 | 16.1 | 9.4 | 20.8 | 17.0 | 30.0 |
| After 5 hours | 26.4 | 41.0 | 29.1 | 28.1 | 70.0 | 45.0 |
| After 30 minutes/after 10 minutes | 1.7 | 1.2 | 1.0 | 2.0 | 1.4 | 2.6 |

| Application amount 2 Evaluation results | | | | | | |
|---|---|---|---|---|---|---|
| Adhesive strength | 4 | 5 | 4 | 4 | 5 | 5 |
| Processed appearance | 3 | 5 | 4 | 3 | 5 | 3 |
| Processing suitability | 4 | 5 | 5 | 5 | 5 | 5 |

**[Table 6]**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Application amount 1 | | | | | | | |
| Component of (x) | A-1 | A-1 | A-1 | A-1 | A-1 | A-1 | A-1 |
| Application amount of (X) (g/m²) | 0.53 | 0.53 | 0.53 | 0.53 | 0.53 | 0.71 | 0.28 |
| Component of (Y) | B-12 | B-13 | B-14 | B-15 | B-16 | B-17 | B-18 |
| Application amount of (Y) (g/m²) | 0.47 | 0.47 | 0.47 | 0.47 | 0.47 | 0.29 | 0.72 |
| Total application amount (g/m²) | 1.00 | 1.00 | 1.00 | 1.00 | 1.00 | 1.00 | 1.00 |

| Application amount 2 | | | | | | | |
|---|---|---|---|---|---|---|---|
| Component of (X) | A-1 | A-1 | A-1 | A-1 | A-1 | A-1 | A-1 |
| Application amount of (X) (g/m²) | 1.07 | 1.06 | 1.06 | 1.06 | 1.06 | 1.43 | 0.56 |
| Component of (Y) | B-12 | B-13 | B-14 | B-15 | B-16 | B-17 | B-18 |
| Application amount of (Y) (g/m²) | 0.93 | 0.94 | 0.94 | 0.94 | 0.94 | 0.57 | 1.44 |
| Total application amount (g/m²) | 2.00 | 2.00 | 2.00 | 2.00 | 2.00 | 2.00 | 2.00 |

| Application amount 1 Tensile shear adhesive strength (N/cm²) | | | | | | | |
|---|---|---|---|---|---|---|---|
| After 0 minute | 0.2 | 0.2 | 0.2 | 0.1 | 0.2 | 2.7 | 2.6 |
| After 5 minutes | 0.2 | 0.2 | 0.2 | 0.2 | 0.4 | 2.4 | 2.1 |
| After 10 minutes | 0.2 | 0.3 | 0.2 | 0.2 | 0.9 | 3.0 | 2.6 |
| After 20 minutes | 0.2 | 0.3 | 0.3 | 0.2 | 3.8 | 2.9 | 4.6 |
| After 30 minutes | 0.2 | 0.3 | 1.3 | 0.2 | 15.3 | 3.1 | 4.2 |
| After 1 hour | 0.2 | 0.3 | 2.0 | 0.3 | 35.5 | 3.0 | 4.6 |
| After 2 hours | 0.3 | 0.5 | 2.6 | 0.7 | 46.5 | 2.6 | 5.7 |
| After 3 hours | 0.6 | 2.4 | 9.2 | 1.5 | 48.1 | 3.2 | 8.7 |
| After 5 hours | 4.2 | 9.7 | 26.8 | 8.4 | 55.7 | 10.5 | 7.9 |
| After 30 minutes/after 10 minutes | 0.9 | 1.0 | 6.3 | 1.2 | 18.0 | 1.1 | 1.6 |

| Application amount 2 Evaluation results | | | | | | | |
|---|---|---|---|---|---|---|---|
| Adhesive strength | 1 | 1 | 5 | 1 | 5 | 2 | 1 |
| Processed appearance | 1 | 2 | 2 | 2 | 2 | 5 | 5 |
| Processing suitability | 1 | 1 | 5 | 1 | 5 | 2 | 2 |

From the foregoing results, the two-component curable adhesive of the present invention satisfies all of the following:
(1) a tensile shear adhesive strength (N1) when provided between two bases and after a lapse of 30 minutes after pressure bonding is 0.5 N/cm² or more;
(2) the tensile shear adhesive strength (N1) when provided between two bases and after a lapse of 30 minutes after pressure bonding is three times or less a tensile shear adhesive strength (N2) after a lapse of 10 minutes after pressure bonding; and
(3) a tensile shear adhesive strength (N3) when provided between two bases and after a lapse of 5 hours after pressure bonding is 20 N/cm² or more;
   thus, it can be seen that all the evaluation items of the adhesive strength, the processed appearance, and the processing suitability are excellent.

On the other hand, in Comparative Examples 1, 2, and 4, the values after 30 minutes and 5 hours of did not satisfy the conditions, and the evaluation results of the adhesive strength, the processed appearance, and the processing suitability were markedly low.

In Comparative Examples 3 and 5, the value after 30 minutes was three times or more the value after 10 minutes, and the processed appearance was markedly low.

In Comparative Examples 6 and 7, the value after 5 hours did not satisfy the condition, and the evaluation results of the adhesive strength and the processing suitability were markedly low.

### Brief Description of Drawing

FIG. 1 is a shape of a laminated film as a sample for measurement of tensile shear adhesive strength. Reference Signs List

- 1: view of laminated film from side
- 2: view of laminated film from top
- 3: base
- 4: base
- 5: adhesion part of two-component curable adhesive
- 6: clamp or the like
- 7: pulling direction during tensile test
- 3: base

## Claims

1. A two-component curable adhesive comprising a polyisocyanate composition (X) containing a polyisocyanate (A) and a resin composition (Y) containing a polyol (B) as essential components, the two-component curable adhesive satisfying (1) to (3):
(1) a tensile shear adhesive strength (N1) when provided between two bases and after a lapse of 30 minutes after pressure bonding is 0.5 N/cm² or more;
(2) the tensile shear adhesive strength (N1) when provided between two bases and after a lapse of 30 minutes after pressure bonding is three times or less a tensile shear adhesive strength (N2) after a lapse of 10 minutes after pressure bonding; and
(3) a tensile shear adhesive strength (N3) when provided between two bases and after a lapse of 5 hours after pressure bonding is 20 N/cm² or more.

2. A two-component curable adhesive comprising a polyisocyanate composition (X) containing a polyisocyanate (A) and a resin composition (Y1) containing a polyol (B) and a polyamine (C) as essential components.

3. The two-component curable adhesive according to claim 2, wherein a molar ratio of an amino group of the polyamine (C) to a hydroxy group of the polyol (B) [amino group/hydroxy group] is 0.001 to 2.0.

4. The two-component curable adhesive according to claim 2 or 3, wherein the polyamine (C) has a polyether structure.

5. The two-component curable adhesive according to any one of claims 2 to 4, wherein the polyisocyanate (A) contains a reaction product of a polyether polyol and an aromatic polyisocyanate.

6. The two-component curable adhesive according to any one of claims 2 to 5, wherein the polyol (B) contains a polyol having a polyether skeleton.

7. The two-component curable adhesive according to any one of claims 2 to 7, wherein the polyol (B) contains at least one selected from the group consisting of castor oil, dehydrated castor oil, hardened castor oil as a hydrogenated product of castor oil, and castor oil-based polyols such as a 5 to 50 mol alkylene oxide adduct of castor oil.

8. The two-component curable adhesive according to any one of claims 2 to 7, wherein the polyol (B) contains a tertiary amine compound having a plurality of hydroxy groups.

9. The two-component curable adhesive according to any one of claims 1 to 8, wherein the two-component curable adhesive is of a solventless type.

10. A method for producing a laminated film, the method comprising a step of two-component separate application in which a polyisocyanate composition (X) containing a polyisocyanate (A) applied to one base and a resin composition (Y1) containing a polyol (B) and a polyamine (C) applied to another base come into contact with each other to be pressure-bonded to each other.

11. A laminated film having a cured adhesive between a first base film and a second base film, the adhesive layer being a layer of the reactive adhesive according to any one of claims 1 to 9.

12. A packaging body made by forming a laminated film having a cured adhesive between a first base film and a second base film into a bag form, the adhesive layer being a layer of the reactive adhesive according to any one of claims 1 to 9.
